# EUROPÄISCHE PATENTSCHRIFT

(11) **EP 3 596 719 B1**
(45) Veröffentlichungstag und Bekanntmachung des Hinweises auf die Patenterteilung: **25.12.2024**
(21) Anmeldenummer: 18711284.2
(22) Anmeldetag: 12.03.2018
(51) Int. Cl.: G01S 5/00, H04W 4/029, H04W 4/44, G08G 1/01, G08G 1/14, G01C 1/00, G01C 21/36

(54) **VERFAHREN ZUR ERMITTLUNG UND/ODER VERWALTUNG EINER PARKRAUMKARTE**
METHOD FOR ASCERTAINING AND/OR MANAGING A PARKING SPACE MAP
PROCÉDÉ DE DÉTERMINATION ET/OU DE GESTION D'UNE CARTE D'ESPACE DE STATIONNEMENT

(30) Priorität: 14.03.2017 DE 102017204180
(43) Veröffentlichungstag der Anmeldung: 22.01.2020
(73) Patentinhaber: Audi AG, 85045 Ingolstadt (DE)
(72) Erfinder: MIRLACH, Franz, 85101 Lenting (DE)
(86) Internationale Anmeldenummer: PCT/EP2018/056021
(87) Internationale Veröffentlichungsnummer: WO 2018/166946

(56) Entgegenhaltungen:
- US-B1- 9 558 664
- BIN YANG ET AL: "iPark", EXTENDING DATABASE TECHNOLOGY, ACM, 2 PENN PLAZA, SUITE 701 NEW YORK NY 10121-0701 USA, 18 March 2013 (2013-03-18), pages 705 - 708, XP058014285, ISBN: 978-1-4503-1597-5, DOI: 10.1145/2452376.2452459
- HUI ZHAO ET AL: "IPARK: Location-Aware-Based Intelligent Parking Guidance over Infrastructureless VANETs", INTERNATIONAL JOURNAL OF DISTRIBUTED SENSOR NETWORKS, vol. 41, no. 6, 1 January 2012 (2012-01-01), pages 281 - 12, XP055131259, ISSN: 1550-1329, DOI: 10.1155/2012/280515

## Beschreibung

Die Erfindung betrifft ein Verfahren zur Ermittlung und/oder Verwaltung einer Belegtheitszustände von Abstellplätzen für ein Kraftfahrzeug in einem Parkraumbereich beschreibenden Parkraumkarte in einer kraftfahrzeugexternen Servereinrichtung.

Um Fahrer von Kraftfahrzeugen zu unterstützten, wurden eine Vielzahl von Unterstützungssystemen vorgeschlagen, bei denen beispielsweise Software-Applikationen (Apps) verwendet werden, um Fahrern Informationen und Dienstleistungen zu Parkplätzen anzubieten. Die bereitgestellten Informationen sind dabei meist auf eine lokale Umgebung bezogen, basieren mithin beispielsweise auf einer Parkraumkarte mit einer Mehrzahl von Abstellplätzen. Somit können Fahrern beispielsweise Informationen wie der Ort eines Abstellplatzes, Preise für das Parken und/oder Öffnungszeiten bereitgestellt werden. Über eine Software-Applikation auf dem Smartphone und/oder über Anzeigeeinrichtungen im Kraftfahrzeug können mithin Informationen zu Abstellplätzen und Parkumgebungen abgerufen werden. Zudem können derartige Software-Applikationen beispielsweise genutzt werden, um zu gewünschten Zielabstellplätzen zu navigieren und/oder Parkgebühren zu bezahlen. Auch kann eine derartige Software-Applikation einem Fahrer die Verfügbarkeit eines Abstellplatzes und/oder einer Parkumgebung, beispielsweise eines Parkplatzes oder Parkhauses, anzuzeigen, um zu vermeiden, dass der Fahrer zu einem bereits besetzten Abstellplatz bzw. zu einer voll belegten Parkumgebung fährt.

Im Stand der Technik wurde vorgeschlagen, die Verfügbarkeit, mithin den Belegungszustand, eines Abstellplatzes zu bestimmen, indem beim Bezahlen über eine Software-Applikation der Standort des Smartphones/des Kraftfahrzeugs ermittelt wird, wonach in einer kraftfahrzeugexternen Servereinrichtung, die die Parkraumkarte verwaltet, der Abstellplatz für die gebuchte Zeit als belegt markiert wird.

DE 10 2011 003 886 A1 schlägt vor, eine Vorrichtung für ein Fahrzeug zum Schaffen einer Fahrsituationsinformation zu schaffen, welche Vorrichtung eine Auswerteeinheit zur Ermittlung eines Parkvorgangs des Fahrzeugs mittels Auswertung einer oder mehrerer Fahrzustandsgrößen und eine Kommunikationseinheit zum Senden von Informationen über den ermittelten Parkvorgang aufweist. Fahrzeugzustandsdaten können dabei eine Geschwindigkeit des Fahrzeugs, eine Beschleunigung des Fahrzeugs, eine Blinkerstellung des Fahrzeugs, eine Lenkradstellung des Fahrzeugs, eine Gangwahlstellung des Fahrzeugs, Navigationsdaten und/oder Positionsdaten eines Fahrerinformationssystems des Fahrzeugs, Umfelddaten von Umfeldsensoren des Fahrzeugs oder von anderen Verkehrsteilnehmern an das Fahrzeug übermittelte Fahrsituationsdaten umfassen. Ersichtlich wird hier eine hoch komplexe Auswertung vorgenommen, um beispielsweise Infrastruktureinrichtungen mit Informationen zu versorgen, die zur Parkplatzbelegungserkennung dienen können.

DE 10 2013 203 909 A1 betrifft ein Verfahren und ein mobiles Endgerät zur Erkennung eines Parkplatzes, wobei vorgeschlagen wird, zu erkennen, ob das mobile Endgerät in ein Kraftfahrzeug eingebracht wird oder dieses verlässt, wobei bei einem Verlassen des Kraftfahrzeugs bestimmt wird, ob die Position einen belegten Parkplatz anzeigt, wobei eine entsprechende Position an einen zentralen Server übermittelt wird. Entsprechend kann bei Einbringen in ein Kraftfahrzeug ebenso überprüft werden, ob die Position einen Parkplatz anzeigt und dann eine Freigabe an den zentralen Server übermitelt werden. Hierbei müssen Parkplätze bereits in einer Parkraumkarte auf dem Server bekannt sein.

"IPARK: Location-Aware-Based Intelligent Parking Guidance over Infrastructureless VANETs", Hui Zhao, Li Lu, Chao Song, and Yue Wu, XP055131259, offenbart ein System zur Ermittlung einer Belegtheitszustände von. Dort geht es um die Führung von Kraftfahrzeugen auf Parkplätzen mit mehreren Abstellplätzen, wobei durch geparkte Fahrzeuge ein Cluster, konkret ein sogenanntes VANET ("vehicular ad hoc network") gebildet werden soll, welches ohne Nutzung jeglicher zusätzlichen Infrastruktur die Überwachung des Parkplatzes auf Belegtheitszustände wahrnehmen soll und Assistenz für Fahrzeuge bereitstellen soll, die Abstellplätze suchen.

Eine weitere, im Stand der Technik vorgeschlagene Möglichkeit zur Ermittlung von Abstellplätzen basiert auf einer Interpretation von Bewegungstrajektorien. Hierfür werden oft GPS-Positionen von Smartphones, auf denen eine Software-Applikation wie eingangs beschrieben installiert ist, verwendet, welche jedoch recht ungenau sind. Zudem kann ein Smartphone auch im Allgemeinen nicht mit absoluter Sicherheit feststellen, ob das Fahrzeug geparkt wurde. Es können mithin basierend auf einfachen Positionsinformationen lediglich Vermutungen darüber angestellt werden, ob ein Parkvorgang stattgefunden hat.

Hieran ändert auch eine Ausbildung nichts, in der ein Kraftfahrzeug regelmäßig, beispielsweise jede Minute oder alle zwei Minuten, seine Position an eine kraftfahrzeugexterne Servereinrichtung sendet, so dass diese den Verkehrsfluss überwachen und Stausituationen erkennen kann. Denn die erhobenen Positionsdaten liegen zeitlich so weit auseinander, dass eine Analyse hinsichtlich eines Parkens nicht vorgenommen werden kann; eine solche Datenreduktion ist jedoch notwendig, um die Datenübertragungsmenge von dem Kraftfahrzeug an die Servereinrichtung zu reduzieren.

Der Erfindung liegt daher die Aufgabe zugrunde, eine verbesserte Möglichkeit zur positionsbasierten Ermittlung und/oder Aktualisierung einer Parkraumkarte anzugeben.

Zur Lösung dieser Aufgabe ist bei einem Verfahren der eingangs genannten Art gemäß Anspruch 1 vorgesehen, dass innerhalb von Kraftfahrzeugen einer mit der Servereinrichtung kommunizierenden Fahrzeugflotte eine einen vorbestimmten Betriebsabschnitt abdeckende Positionsfolge von durch das Kraftfahrzeug besuchten, geodätischen und/oder zu geodätischen Positionen in Beziehung setzbaren Positionen aufgenommen wird, welche bei Eintritt eines ein Abstellen des jeweiligen Kraftfahrzeugs anzeigenden Abstellkriteriums an die Servereinrichtung übermittelt wird, wobei die Servereinrichtung beim Empfang einer Positionsfolge überprüft, ob die Positionsfolge eine Einparktrajektorie auf einem verwalteten oder zu verwaltenden Abstellplatz beschreibt, und bei Erkennen einer Einparktrajektorie den durch die Endposition der Positionsfolge beschriebenen Abstellplatz als belegt markiert.

Erfindungsgemäß wird also vorgeschlagen, innerhalb von Kraftfahrzeugen in einer hohen Frequenz, mithin einer deutlich höheren Frequenz als beispielsweise einer Positionsaufnahme zur Ermittlung einer Verkehrslageinformation, Positionen aufzunehmen und innerhalb des Kraftfahrzeugs in einer geeigneten Speichereinrichtung abzuspeichern. Dabei betreffen die Positionsfolgen, die aus einer solchen Aufnahme von Positionen hervorgehen, einen vorbestimmten Betriebsabschnitt, beispielsweise ein vorbestimmtes Zeitintervall, bevorzugt aber eine vorbestimmte Zahl von Positionen, so dass sowohl der Speicherplatz als auch der Übertragungsaufwand gering gehalten werden können. Insbesondere werden innerhalb des Kraftfahrzeugs dann auch nur die auf den Betriebsabschnitt bezogenen Positionen gespeichert. Am Ende einer Fahrt, wenn also ein Abstellkriterium erfüllt ist, das anzeigt, dass die Fahrt beendet ist, wird die zuletzt aufgenommene, aktuelle Positionsfolge an die kraftfahrzeugexterne Servereinrichtung zur weiteren Auswertung übermittelt.

Der Wechsel der Frequenz bei der Aufnahme von Positionen im Vergleich zur Ermittlung einer Verkehrslageinformation erlaubt es innerhalb der Servereinrichtung nun, die Trajektorie am Ende der Fahrt zu analysieren um festzustellen, ob ein Einparkvorgang erfolgt ist. Einparktrajektorien weisen typische Charakteristiken auf, je nachdem, welche Art von Einparkvorgang durchgeführt wurde. Beispielsweise kann festgestellt werden, ob das Kraftfahrzeug an der Straße oder abseits der Straße geparkt hat, ob es vorwärts oder rückwärts eingeparkt hat und/oder ob es in eine Schräg-, Längs-, oder Querparklücke gefahren ist. Dabei ist es besonders vorteilhaft, dass vom Kraftfahrzeug selbst aufgenommene Positionsfolgen verwendet werden, nachdem dort die Daten von globalen Navigationssatellitensystemen üblicherweise noch verfeinert werden, beispielsweise durch ein Map-Matching und/oder eine Koppelnavigation ("Dead Reckoning"). Insbesondere kann also vorgesehen sein, dass die Positionen unter Verwendung einer Positionsinformation eines Sensors eines globalen Navigationssatellitensystems des jeweiligen Kraftfahrzeugs ermittelt werden, bevorzugt unter Verfeinerung durch ein Map-Matching und/oder eine Koppelnavigation.

Basierend auf der Positionsfolge lässt sich also eine sehr zuverlässige Erkennung eines Einparkvorgangs realisieren. Wird nun festgestellt, dass ein Einparkvorgang stattgefunden hat, ist aber der entsprechende Abstellplatz in der Parkraumkarte noch nicht bekannt, kann er dieser hinzugefügt werden und entsprechend als belegt markiert werden. Ist der Abstellplatz bereits bekannt, kann sein Status entsprechend angepasst werden.

Die erfindungsgemäß vorgeschlagene Art der Daten, also der Positionsfolge, und ihrer Analyse liefern eine sehr genaue Parkraumkarte, auf der Parkplätze und, worauf im Folgenden noch näher eingegangen werden wird, auch deren Attribute sowie der Belegungszustand präzise dargestellt werden können. Dabei müssen nur wenige Daten innerhalb des Kraftfahrzeugs vorgehalten und nach Beendigung der Fahrt entsprechend übersandt werden. Der hier beschriebene erfindungsgemäße Ansatz funktioniert unabhängig von externen Datenquellen wie Content-Providern und dergleichen. Er kann jedoch auch verwendet werden, um Informationen externer Datenquellen zu ergänzen und so den Informationsgrad deutlich zu steigern.

Zur Überprüfung, ob die Positionsfolge eine Einparktrajektorie beschreibt, ist die Verwendung wenigstens eines Auswertungsalgorithmus auf der Servereinrichtung zweckmäßig. Beispielsweise können aus der Positionsfolge Trajektorienmerkmale der durch sie beschriebenen Trajektorie extrahiert werden, beispielsweise Richtungswechsel, bewirkter Querversatz, Abweichungen zu Verkehrswegen und dergleichen, so dass eine Klassifizierung stattfinden kann. Denkbar ist es zusätzlich oder alternativ auch, Vergleiche mit Beispieltrajektorien für Einparktrajektorien vorzunehmen und dergleichen.

In einer besonders zweckmäßigen Ausgestaltung der vorliegenden Erfindung ist vorgesehen, dass zyklisch, insbesondere in Abständen von 0,5 Sekunden bis 1,5 Sekunden, bevorzugt einer Sekunde, Positionen im Kraftfahrzeug aufgezeichnet werden, wobei der Betriebsabschnitt durch eine Positionsanzahl zu speichernder Positionen, insbesondere 30 bis 80 Positionen, bevorzugt 50 Positionen, definiert wird. In einer bevorzugten Ausgestaltung kann also im Kraftfahrzeug sekündlich die aktuelle Position, insbesondere als geodätische Position, ermittelt werden und im Kraftfahrzeug gespeichert werden, wobei die Länge der gespeicherten Positionsfolge beispielsweise auf 50 Positionen begrenzt werden kann. In diesem Kontext ist es zweckmäßig, zum Speichern der Positionsfolge einen Ringspeicher zu verwenden, in dem immer die älteste Position von der neuesten aufgenommenen Position überschrieben wird. Es wird also mit einer aktuell aufgenommenen Position immer die jeweils älteste gespeicherte Position überschrieben, sobald der Ringspeicher gefüllt ist. Somit ist eine besonders einfache Realisierung gegeben.

Eine besonders vorteilhafte Ausgestaltung in diesem Kontext sieht vor, dass die zyklische Aufnahme der Positionen bei unbewegtem Kraftfahrzeug unterbrochen wird, bis sich das Kraftfahrzeug wieder bewegt. Auf diese Art und Weise werden insbesondere Fälle abgegriffen, in denen das Abstellkriterium erst deutlich nach Abschluss des Einparkvorgangs erfüllt ist, beispielsweise, wenn der Fahrer den Motor aus bestimmten Gründen noch einige Zeit laufen lässt bzw. die Zündung aktiv hält. Dann wird in dieser Ausgestaltung vorteilhaft vermieden, in der Positionsfolge lediglich den Standvorgang auf dem Abstellplatz abzubilden. Auf diese Weise werden die Daten der Positionsfolge auf das Wesentliche reduziert.

Als Abstellkriterium kann zweckmäßig ein Ausschalten eines Motors und/oder einer Zündung eines jeweiligen Kraftfahrzeugs überprüft werden. Der Überprüfungsvorgang kann mithin beispielsweise die "Klemme 15" umfassen. Das Ausschalten des Motors und/oder der Zündung wird mithin als Anzeichen für ein Ende der Fahrt und somit der Betriebsphase des Kraftfahrzeugs angesehen.

Eine besonders vorteilhafte Weiterbildung der vorliegenden Erfindung sieht vor, dass durch Auswertung der Positionsfolge wenigstens eine Zusatzinformation ermittelt wird, insbesondere eine Einparkrichtung und/oder eine Einparkposition und/oder ein Einparkfehler. Neben der Tatsache, ob ein Einparkvorgang stattgefunden hat, kann die durch die Positionsfolge beschriebene Einparktrajektorie noch eine Vielzahl weiterer Informationen enthalten, insbesondere auch dann, wenn weitere Informationen über den Parkraumbereich herangezogen werden, beispielsweise digitale Kartendaten, die anzeigen, wo Verkehrswege vorliegen, die bislang bestehende Parkraumkarte selber, die bislang gesammelte Information über den Abstellplatz enthalten kann, und dergleichen. Beispielsweise kann durch weitere Analyse als Zusatzinformation festgestellt werden, ob es sich um eine Schräg-, Längs-, oder Querparklücke handelt. Auch Einparkfehler können gegebenenfalls festgestellt werden, beispielsweise, wenn die Positionen aussagen, dass der Fahrer des Kraftfahrzeugs zwei Abstellplätze gleichzeitig nutzt und/oder unzulässig auf dem Gehweg parkt oder dergleichen. Im Fall eines solchen Einparkfehlers kann auch eine Kommunikation stattfinden, insbesondere zur Übersendung entsprechender Warninformationen an das Kraftfahrzeug selbst und/oder an eine für den Parkraum zuständige Dienststelle.

Insbesondere kann jedoch vorgesehen sein, dass durch insbesondere statistische Auswertung der Zusatzinformation eine dem Abstellplatz zuzuordnende Beschreibungsinformation ermittelt wird. Dabei kann es sich insbesondere um Attribute handeln, die den Abstellplatz genauer beschreiben. So können beispielsweise noch nicht in der Parkraumkarte bekannte Abstellplätze auch gleich mit geeigneten Attributen versehen werden, wie dies oben bereits bezüglich der Art des Abstellplatzes angedeutet wurde. In einer bevorzugten Ausgestaltung kann auch wenigstens ein Teil der einem Abstellplatz zugeordneten Beschreibungsinformation einem Kraftfahrzeug, das auf dem Abstellplatz einparken soll oder will, übermittelt werden, beispielsweise Hinweise, wie am besten auf dem Abstellplatz eingeparkt werden soll ("bevorzugt vorwärts einparken") und dergleichen. Insbesondere dann, wenn der Einparkvorgang wenigstens teilweise automatisch durch ein Fahrzeugsystem assistiert stattfinden soll, können sich solche Zusatzattribute als nützlich erweisen.

Die Beschreibungsinformation bzw. Zusatzinformationen im Allgemeinen lassen sich auch anderweitig nützlich auswerten. Beispielsweise kann festgestellt werden, wie kompliziert es ist, auf einen Abstellplatz einzuparken, insbesondere durch statistische Bewertung verschiedener Einparktrajektorien, woraus sich beispielsweise die Notwendigkeit baulicher Veränderungen an dem Abstellplatz ergeben kann.

Vorzugsweise kann bei Erfüllung eines Wiederinbetriebnahmekriteriums für ein abgestelltes Kraftfahrzeug die zuletzt gespeicherte Positionsfolge und/oder eine Identifikationsinformation erneut an die Servereinrichtung übermittelt werden, welche das Kraftfahrzeug anhand der Positionsfolge und/oder der Identifikationsinformation identifiziert und den entsprechenden Abstellplatz als wieder freigegeben markiert. Das Wiederinbetriebnahmekriterium kann, entsprechend dem Abstellkriterium, insbesondere überprüfen, ob ein Motor eingeschaltet wird und/oder eine Zündung eingeschaltet wird. Auch hier kann sich die Überprüfung beispielsweise auf die Klemme 15 beziehen. Besonders zweckmäßig ist es ferner, erneut die Positionsfolge, die weiterhin in der Speichereinrichtung im Kraftfahrzeug vorgehalten wird, zu übersenden, da diese eine eindeutige Identifikation des Parkvorgangs und somit des Kraftfahrzeugs darstellt. Auf diese Weise kann auf die Verwendung sonstiger Identifikationsinformationen verzichtet werden. Die Servereinrichtung kann dann beispielsweise einen Vergleich von in Frage kommenden, seitens der Servereinrichtung gespeicherten Positionsfolgen vornehmen, um das Kraftfahrzeug zu identifizieren und zu wissen, welches Kraftfahrzeug wieder in Betrieb genommen wurde, um abgestellt zu werden. Danach kann die Positionsfolge auf der Servereinrichtung gelöscht werden; es ist jedoch zweckmäßig, sie im Kraftfahrzeug noch vorzuhalten, insbesondere dann, wenn sich der Fahrer entschließt, trotz einer Wiederinbetriebnahme nicht wegzufahren, sondern das Kraftfahrzeug nochmals zu verlassen, was dazu führen wird, dass wiederum die Positionsfolge übermittelt wird und der Abstellplatz wieder als belegt markiert werden würde.

Eine zweckmäßige Weiterbildung in diesem Kontext sieht vor, dass für einen wieder freigegebenen Abstellplatz insbesondere aus den Zeitpunkten des Aus- und Einparkens eine Nutzungsinformation ermittelt wird. Nachdem der Ausparkvorgang über Zeitstempel, Abstellplatz, Positionsfolge und/oder Identifikationsinformation dem Einparkvorgang zugeordnet wurde, kann als Nutzungsinformation beispielsweise eine Parkdauer bestimmt werden. Die Bestimmung von Nutzungsinformationen ermöglicht, insbesondere durch statistische Auswertung, die Erstellung eines Belegungsprofils des Abstellplatzes, wobei insbesondere auch zu einer gemeinsamen Parkumgebung gehörende Abstellplätze gemeinsam betrachtet werden können, um ein Belegungsprofil der Parkumgebung oder dergleichen zu erstellen.

Eine weitere, besonders bevorzugte Ausgestaltung der Erfindung sieht vor, das die Servereinrichtung zusätzlich eine Verkehrsinformationskarte verwaltet und die Kraftfahrzeuge der Servereinrichtung in regelmäßigen Zeitabständen, die wenigstens das zehnfache der Zeitabstände der Positionen der Positionsfolge betragen, eine aktuelle Position des jeweiligen Kraftfahrzeugs übermitteln, durch deren Auswertung eine Verkehrslageinformation auf wenigstens einem Verkehrsweg des Parkraumbereichs ermittelt wird. Die zentrale Servereinrichtung muss also nicht nur der Verwaltung der Parkraumkarte dienen, sondern kann zudem auch eine Verkehrsinformationskarte verwalten, die beispielsweise anzeigt, auf welchen Verkehrswegen ein hohes Verkehrsaufkommen/Stau vorliegt und dergleichen. Hierzu kann vorgesehen sein, dass die einzelnen Kraftfahrzeuge regelmäßig, beispielsweise jede Minute oder alle zwei Minuten, ihre aktuelle Position für die Bereitstellung derartiger "Traffic-Services" an die Servereinrichtung übermitteln, welche diese entsprechend auswertet.

Die Servereinrichtung kann im Rahmen der vorliegenden Erfindung verschieden ausgebildet sein. So kann die Servereinrichtung beispielsweise als eine Cloud und/oder als Teil einer Cloud ausgebildet sein, denkbar ist es aber auch, die Servereinrichtung als einen Backend-Rechner auszubilden.

Ein zur Durchführung des erfindungsgemäßen Verfahrens weitergebildetes Kraftfahrzeug weist wenigstens eine Positionsbestimmungseinrichtung, eine Speichereinrichtung, eine Kommunikationseinrichtung und eine Steuereinrichtung auf. Die Steuereinrichtung ist dazu ausgebildet, die Positionsfolge aufzunehmen und in der Speichereinrichtung abzuspeichern sowie die Erfüllung des Abstellkriteriums und gegebenenfalls des Wiederinbetriebnahmekriteriums zu überwachen, mithin alle kraftfahrzeugseitig notwendigen Schritte des erfindungsgemäßen Verfahrens vorzunehmen. Insbesondere kann die Speichereinrichtung als ein Ringspeicher ausgebildet sein und/oder die Positionsbestimmungseinrichtung einen Sensor eines globalen Navigationssatellitensystems (GNSS), insbesondere einen GPS-Sensor, umfassen.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: einen Ablaufplan eines Ausführungsbeispiels des erfindungsgemäßen Verfahrens, und
- Fig. 2: einen Ausschnitt aus einem Parkraumbereich.

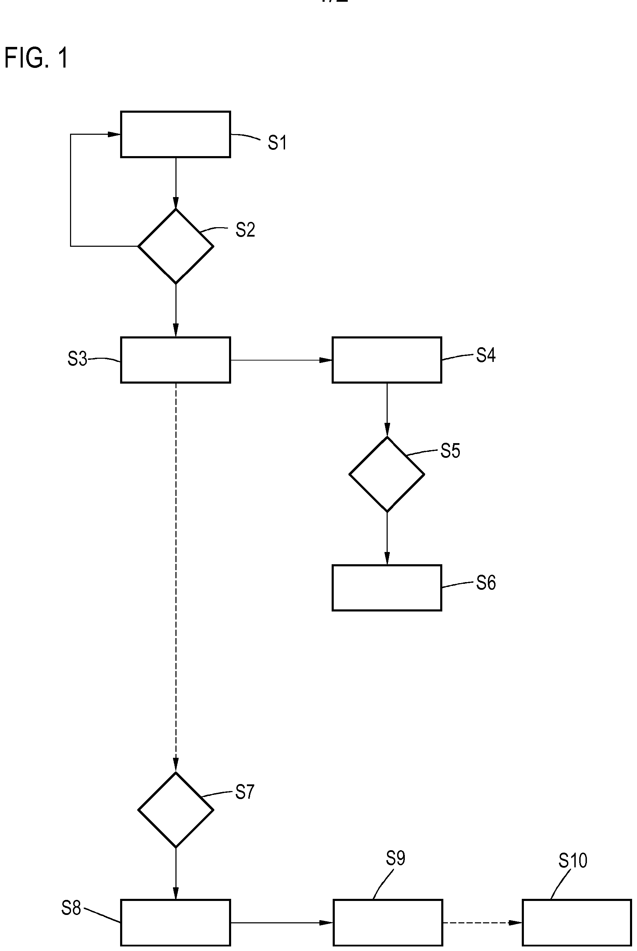

Fig. 1 zeigt einen Ablaufplan eines Ausführungsbeispiels des erfindungsgemäßen Verfahrens. Dabei finden die Schritte auf der linken Seite in allen Kraftfahrzeugen einer Kraftfahrzeugflotte statt, die mit einer zentralen Servereinrichtung kommuniziert, deren Schritte auf der rechten Seite gezeigt sind.

Während einer Betriebsphase eines jeweiligen Kraftfahrzeugs wird in einem Schritt S1 zyklisch eine aktuelle Position des Kraftfahrzeugs mittels einer Positionsbestimmungseinrichtung des Kraftfahrzeugs aufgenommen und in einer Positionsliste in einer Speichereinrichtung des Kraftfahrzeugs gespeichert. Die aktuelle Position wird vorliegend als geodätische Position auf Grundlage von Positionsdaten eines GPS-Sensors des Kraftfahrzeugs bestimmt; diese Position wird verfeinert durch Map-Matching und Koppelnavigation (Dead Reckoning). Die Speichereinrichtung ist ein Ringspeicher, in den 50 Positionen eingespeichert werden können. Wird eine neue Position eingespeichert, wird die älteste vorhandene Position entsprechend gelöscht. Das Speichern der aktuellen Position erfolgt dabei grundsätzlich jede Sekunde, wobei allerdings überprüft wird, ob sich das Kraftfahrzeug überhaupt bewegt. Ist dies nicht der Fall, wird das Einspeichern unterbrochen, bis sich das Kraftfahrzeug wieder bewegt. Es kann also gesagt werden, dass die Positionsfolge in der Speichereinrichtung eine 50-sekündige Bewegung des Kraftfahrzeugs abdeckt.

In einem Schritt S2 wird seitens einer entsprechenden Steuereinrichtung des Kraftfahrzeugs, die auch die Aufnahme der Positionsfolge koordiniert, überprüft, ob ein Abstellkriterium erfolgt ist, vorliegend, ob ein Motor des Kraftfahrzeugs abgestellt wird. Ist das Abstellkriterium nicht erfüllt, dauert die Betriebsphase fort und es werden weiter im Schritt S1 Projektionsdaten aufgenommen; ist das Abstellkriterium im Schritt S2 jedoch erfüllt, wird in einem Schritt S3 die aktuelle Positionsfolge aus der Speichereinrichtung mittels einer Kommunikationseinrichtung des Kraftfahrzeugs an eine zentrale Servereinrichtung, hier einen Backend-Rechner, übermittelt und dort mittels einer entsprechenden Kommunikationseinrichtung empfangen.

In der Servereinrichtung erfolgt in einem Schritt S4 eine Auswertung der empfangenen Positionsfolge zumindest dahingehend, ob sie eine Einparktrajektorie darstellt und die Endposition des übersendenden Kraftfahrzeugs mithin als ein Abstellplatz, der für die in der Servereinrichtung verwaltete Parkraumkarte relevant ist, angesehen werden muss. Allerdings werden auch Zusatzinformationen, insbesondere Beschreibungsinformationen, die dem Abstellplatz zuzuordnen sind, ermittelt, insbesondere, ob es sich um einen Parkplatz quer oder längs zur Straße bzw. einen Schrägparkplatz handelt, ob dieser sich am Rand der Straße oder entfernt von der Straße befindet und dergleichen. Hierzu werden auch vorliegende digitale Kartendaten in der Servereinrichtung, die das Verkehrswegenetz kennzeichnen, berücksichtigt.

Wird dann in einem Schritt S5 festgestellt, dass tatsächlich eine Einparktrajektorie vorlag, wird in einem Schritt S6 die Parkraumkarte, die sich auf einen bestimmten Parkraumbereich bezieht, aktualisiert. War die Abstellposition darin noch nicht als Abstellplatz bekannt, wird der Abstellplatz entsprechend hinzugefügt, inklusive entsprechender Beschreibungsinformationen, die letztlich Attribute des Abstellplatzes darstellen. In jedem Fall wird aber, nachdem sich das übersendende Kraftfahrzeug ja auf dem Abstellplatz abgestellt hat, der Abstellplatz in der Parkraumkarte als belegt markiert. Wurden als Zusatzinformation Einparkfehler festgestellt, kann eine entsprechende Übersendung einer Warninformation an das Kraftfahrzeug zurück und/oder an eine Dienststelle erfolgen.

Es sei noch angemerkt, dass Beschreibungsinformationen, die in der Parkraumkarte dem Abstellplatz zugeordnet gespeichert werden können, auch Kraftfahrzeugen zur Verfügung gestellt werden können, die auf dem Abstellplatz einparken sollen bzw. wollen.

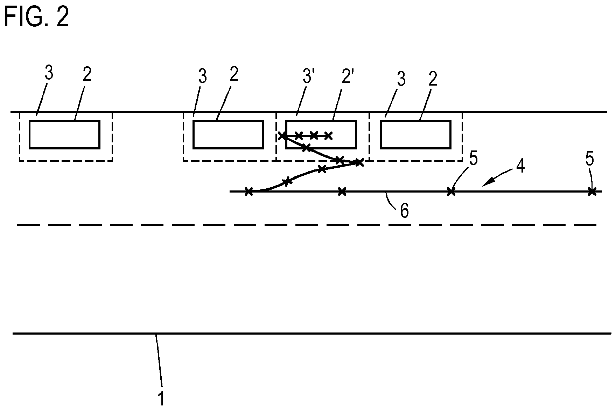

Diese Schritte seien im Hinblick auf Fig. 2 nochmals näher erläutert. Gezeigt ist dort eine Straße 1, entlang derer Kraftfahrzeuge 2 auf Abstellplätzen 3 geparkt sind. Zuletzt ist das Kraftfahrzeug 2' auf dem Abstellplatz 3' eingeparkt worden, wobei die Positionsfolge 4 anhand der jeweils im Abstand von einer Sekunde aufgenommenen Positionen 5 sowie die sich hieraus ergebende Trajektorie 6 gezeigt sind. Ersichtlich handelt es sich um eine klassische Einparktrajektorie für ein Einparken in einen gleich der Straße 1 orientierten Abstellplatz 3'. Der Fahrer hat vorliegend in drei Zügen eingeparkt. Entsprechende Charakteristiken der Trajektorie 6 können in der Servereinrichtung erkannt werden, so dass die Trajektorie 6 als Einparktrajektorie erkannt werden kann und entsprechend festgestellt werden kann, dass das Kraftfahrzeug 2' auf einem Abstellplatz 3' abgestellt wurde sowie dass dieser längs zum Straßenverlauf orientiert ist.

Es kann im Übrigen bezüglich der Abstellplätze 3 auch eine statistische Auswertung von Positionsfolgen und abgeleiteten Zusatzinformationen stattfinden, beispielsweise dahingehend, ob es besonders schwierig ist, in den Abstellplatz 3 einzuparken, so dass beispielsweise bauliche Änderungen angezeigt sind.

Zurückkehrend zu Fig. 1 wird in dem Kraftfahrzeug 2 nun mittels der Steuereinrichtung in einem Schritt S7 regelmäßig überprüft, ob ein Wiederinbetriebnahmekriterium erfüllt ist, welches anzeigt, dass eine neue Betriebsphase des Kraftfahrzeugs 2 beginnt und es voraussichtlich ausparken wird. Hierzu wird wiederum an Klemme 15 überprüft, ob der Motor angelassen wird. Ist dies der Fall, wird mittels der Kommunikationseinrichtung im Schritt S8 die Positionsfolge erneut an die Servereinrichtung übermittelt, wo in einem Schritt S9 eine Zuordnung durch Vergleich der Positionsfolgen als Identifikationsinformation stattfindet und der Abstellplatz 3 entsprechend wieder als freigegeben in der Parkraumkarte markiert wird. Ferner erfolgt in einem Schritt S10 auch eine weitere Auswertung zur Ermittlung eines Belegungsprofils des Abstellplatzes 3. Hierzu wird insbesondere die Parkdauer bestimmt.

Die Parkraumkarte kann im Übrigen, wie grundsätzlich bekannt, auf vielfältige Art und Weise genutzt werden, insbesondere im Zusammenhang mit Parkassistenzdiensten, die beispielsweise freie Abstellplätze zuweisen können, zu diesen navigieren können, automatisiert die Bezahlung handhaben können und dergleichen.

Es sei noch angemerkt, dass die Servereinrichtung in diesem Ausführungsbeispiel auch zur Ermittlung einer Verkehrsinformationskarte dient, so dass die Kraftfahrzeuge ohnehin zyklisch, hier im Abstand von jeweils einer Minute, ihre aktuelle Position übermitteln, welche Positionen dann ausgewertet werden können, um eine Verkehrslageinformation zu ermitteln, welche beispielsweise das Vorhandensein von Staus auf Verkehrswegen des abgedeckten Parkraumbereichs angibt und dergleichen.

## Patentansprüche

1. Verfahren zur Ermittlung und/oder Verwaltung einer Belegtheitszustände von Abstellplätzen für ein Kraftfahrzeug (2, 2') in einem Parkraumbereich beschreibenden Parkraumkarte in einer kraftfahrzeugexternen Servereinrichtung, wobei innerhalb von Kraftfahrzeugen (2, 2') einer mit der Servereinrichtung kommunizierenden Fahrzeugflotte eine einen vorbestimmten Betriebsabschnitt abdeckende Positionsfolge (4) von durch das Kraftfahrzeug (2, 2') besuchten, geodätischen und/oder zu geodätischen Positionen in Beziehung setzbaren Positionen (5), welche bei Eintritt eines ein Abstellen des jeweiligen Kraftfahrzeugs (2, 2') anzeigenden Abstellkriteriums an die Servereinrichtung übermittelt wird, aufgenommen wird, wobei die Servereinrichtung bei Empfang einer Positionsfolge (4) anhand dessen, ob ein Einparkvorgang erfolgt ist, überprüft, ob die Positionsfolge (4) eine Einparktrajektorie auf einen verwalteten oder zu verwaltenden Abstellplatz (3, 3') beschreibt, und bei Erkennen einer Einparktrajektorie den durch die Endposition der Positionsfolge (4) beschriebenen Abstellplatz (3, 3') als belegt markiert.

2. Verfahren nach Anspruch 1,
**dadurch gekennzeichnet,**
**dass** zyklisch Positionen (5) im Kraftfahrzeug (2, 2') aufgezeichnet werden, wobei der Betriebsabschnitt durch eine Positionsanzahl zu speichernder Positionen (5) definiert wird.

3. Verfahren nach Anspruch 2,
**dadurch gekennzeichnet,**
**dass** zum Speichern der Positionsfolge (4) ein Ringspeicher verwendet wird, in dem immer die älteste Position (5) von der neuesten aufgenommenen Position (5) überschrieben wird.

4. Verfahren nach Anspruch 2 oder 3,
**dadurch gekennzeichnet,**
**dass** die zyklische Aufnahme der Positionen (5) bei unbewegtem Kraftfahrzeug (2, 2') unterbrochen wird, bis sich das Kraftfahrzeug (2, 2') wieder bewegt.

5. Verfahren nach einem der vorangehenden Ansprüche,
**dadurch gekennzeichnet,**
**dass** die Positionen (5) unter Verwendung einer Positionsinformation eines Sensors eines globalen Navigationssatellitensystems des jeweiligen Kraftfahrzeugs (2, 2') ermittelt werden.

6. Verfahren nach einem der vorangehenden Ansprüche,
**dadurch gekennzeichnet,**
**dass** als Abstellkriterium ein Ausschalten eines Motors und/oder einer Zündung des jeweiligen Kraftfahrzeugs (2, 2') überprüft wird.

7. Verfahren nach einem der vorangehenden Ansprüche,
**dadurch gekennzeichnet,**
**dass** durch Auswertung der Positionsfolge (4) wenigstens eine Zusatzinformation ermittelt wird.

8. Verfahren nach Anspruch 7,
**dadurch gekennzeichnet,**
**dass** durch statistische Auswertung der Zusatzinformation eine dem Abstellplatz (3, 3') zuzuordnende Beschreibungsinformation ermittelt wird.

9. Verfahren nach einem der vorangehenden Ansprüche,
**dadurch gekennzeichnet,**
**dass** bei Erfüllung eines Wiederinbetriebnahmekriteriums für ein abgestelltes Kraftfahrzeug (2, 2') die zuletzt gespeicherte Positionsfolge (4) und/oder eine Identifikationsinformation erneut an die Servereinrichtung übermittelt wird, welche das Kraftfahrzeug (2, 2') anhand der Positionsfolge (4) und/oder der Identifikationsinformation identifiziert und den entsprechenden Abstellplatz (3, 3') als wieder freigegeben markiert.

10. Verfahren nach Anspruch 9,
**dadurch gekennzeichnet,**
**dass** für einen wieder freigegebenen Abstellplatz (3, 3') aus den Zeitpunkten des Aus- und Einparkens eine Nutzungsinformation ermittelt wird.

11. Verfahren nach einem der vorangehenden Ansprüche,
**dadurch gekennzeichnet,**
**dass** die Servereinrichtung zusätzlich eine Verkehrsinformationskarte verwaltet und die Kraftfahrzeuge (2, 2') der Servereinrichtung in regelmäßigen Zeitabständen, die wenigstens das Zehnfache der Zeitabstände der Positionen (5) der Positionsfolge (4) betragen, eine aktuelle Position (5) des jeweiligen Kraftfahrzeugs (2, 2') übermitteln, durch deren Auswertung eine Verkehrslageinformation auf wenigstens einem Verkehrsweg des Parkraumbereichs ermittelt wird.

## Claims

1. Method for ascertaining and/or managing a parking space map, describing occupancy states of parking spaces for a motor vehicle (2, 2') in a parking space area, in a motor-vehicle-external server apparatus,
wherein a position sequence (4), covering a predetermined operating section, of geodetic positions (5) and/or positions relatable to geodetic positions that are visited by the motor vehicle (2, 2'), which position sequence is transmitted to the server apparatus when a parking criterion indicating parking of the respective motor vehicle (2, 2') occurs, is recorded inside motor vehicles (2, 2') of a vehicle fleet communicating with the server apparatus, with the server apparatus checking, on receipt of a position sequence (4), whether the position sequence (4) describes a parking trajectory for a parking space (3, 3') that is managed or to be managed, and marking the parking space (3, 3') described by the final position in the position sequence (4) as occupied when a parking trajectory is detected.

2. Method according to claim 1,
**characterised in that**
positions (5) in the motor vehicle (2, 2') are recorded cyclically, wherein the operating section is defined by a number of positions (5) of positions to be stored.

3. Method according to claim 2,
**characterised in that**
to store the position sequence (4), a ring memory is used in which the oldest position (5) is always overwritten by the latest recorded position (5).

4. Method according to claim 2 or 3,
**characterised in that**
the cyclical recording of the positions (5) is paused if the motor vehicle (2, 2') has stopped moving until the motor vehicle (2, 2') starts moving again.

5. Method according to any of the preceding claims,
**characterised in that**
the positions (5) are determined using a piece of position information from a sensor of a global navigation satellite system of the respective motor vehicle (2, 2').

6. Method according to any of the preceding claims,
**characterised in that**
switching off of an engine and/or an ignition of the respective motor vehicle (2, 2') is checked as a parking criterion.

7. Method according to any of the preceding claims,
**characterised in that**
at least one piece of additional information is determined by evaluating the position sequence (4).

8. Method according to claim 7,
**characterised in that**
a piece of description information to be assigned to the parking space (3, 3') is determined by statistically evaluating the piece of additional information.

9. Method according to any of the preceding claims,
**characterised in that**
when a restart criterion for a parked motor vehicle (2, 2') is met, the last stored position sequence (4) and/or a piece of identification information is transmitted again to the server apparatus, which identifies the motor vehicle (2, 2') based on the position sequence (4) and/or the piece of identification information and marks the corresponding parking space (3, 3') as available again.

10. Method according to claim 9,
**characterised in that**
a piece of usage information is determined for an available parking space (3, 3') from the times of parking and exiting.

11. Method according to any of the preceding claims,
**characterised in that**
the server apparatus additionally manages a traffic information map and the motor vehicles (2, 2') transmit a current position (5) of the respective motor vehicle (2, 2') to the server apparatus at regular time intervals which are at least ten times longer than the time intervals of the positions (5) of the position sequence (4), the evaluation of which current position determines a piece of traffic situation information for at least one traffic route to the parking space area.

## Revendications

1. Procédé de détermination et/ou de gestion d'une carte de stationnement décrivant des états d'occupation de places de stationnement pour un véhicule automobile (2, 2') dans une zone de stationnement dans un appareil serveur externe au véhicule automobile,
dans lequel, à l'intérieur de véhicules automobiles (2, 2') d'une flotte de véhicules communiquant avec l'appareil serveur, une suite de positions (4) couvrant une section de fonctionnement prédéterminée de positions géodésiques visitées par le véhicule automobile (2, 2') et/ou de positions (5) pouvant être associées à des positions géodésiques qui sont transmises à l'appareil serveur lors de l'entrée d'un critère de stationnement indiquant un stationnement du véhicule automobile (2, 2') respectif, dans lequel l'appareil serveur vérifie lors de la réception d'une suite de positions (4), à l'aide du fait ou non qu'une manoeuvre de stationnement est effectuée, si la suite de positions (4) décrit une trajectoire de stationnement sur une place de stationnement (3, 3') gérée ou à gérer, et, en cas de reconnaissance d'une trajectoire de stationnement, marque comme occupée la place de stationnement (3, 3') décrite par la position finale de la suite de positions (4).

2. Procédé selon la revendication 1,
**caractérisé en ce que**
des positions (5) sont enregistrées de manière cyclique dans le véhicule automobile (2, 2'), dans lequel la section de fonctionnement est définie par un nombre de positions (5) à enregistrer.

3. Procédé selon la revendication 2,
**caractérisé en ce que**
pour enregistrer la suite de positions (4), une mémoire circulaire est utilisée, dans laquelle la position (5) la plus ancienne est toujours écrasée par la position (5) enregistrée la plus récente.

4. Procédé selon la revendication 2 ou 3,
**caractérisé en ce que**
l'enregistrement cyclique des positions (5) est interrompu lorsque le véhicule automobile (2, 2') est immobile, jusqu'à ce que le véhicule automobile (2, 2') se déplace à nouveau.

5. Procédé selon l'une quelconque des revendications précédentes,
**caractérisé en ce que**
les positions (5) sont déterminées en utilisant une information de position d'un capteur d'un système global de navigation par satellite du véhicule automobile (2, 2') respectif.

6. Procédé selon l'une quelconque des revendications précédentes,
**caractérisé en ce que**
une coupure d'un moteur et/ou d'un allumage du véhicule automobile (2, 2') respectif est vérifiée en tant que critère de stationnement.

7. Procédé selon l'une quelconque des revendications précédentes,
**caractérisé en ce que**
au moins une information supplémentaire est déterminée par évaluation de la suite de positions (4).

8. Procédé selon la revendication 7,
**caractérisé en ce que**
une information de description à associer à la place de stationnement (3, 3') est déterminée en évaluant statistiquement l'information supplémentaire.

9. Procédé selon l'une quelconque des revendications précédentes,
**caractérisé en ce que**
lorsqu'un critère de remise en service est rempli pour un véhicule automobile (2, 2') stationné, la dernière suite de positions (4) enregistrée et/ou une information d'identification est à nouveau transmise à l'appareil serveur qui identifie le véhicule automobile (2, 2') à l'aide de la suite de positions (4) et/ou de l'information d'identification et marque la place de stationnement (3, 3') correspondante comme de nouveau libre.

10. Procédé selon la revendication 9,
**caractérisé en ce que**
une information d'utilisation est déterminée pour une place de stationnement (3, 3') de nouveau libre à partir des moments de stationnement et de sortie de stationnement.

11. Procédé selon l'une quelconque des revendications précédentes,
**caractérisé en ce que**
l'appareil serveur gère en outre une carte d'informations routières et les véhicules automobiles (2, 2') transmettent à l'appareil serveur, à des intervalles de temps réguliers qui sont au moins le décuple des intervalles de temps des positions (5) de la suite de positions (4), une position actuelle (5) du véhicule automobile (2, 2') respectif, dont l'évaluation permet de déterminer une information de situation routière sur au moins une voie de circulation de la zone de stationnement.
